# EUROPÄISCHE PATENTSCHRIFT

(11) **EP 3 478 432 B1**
(45) Veröffentlichungstag und Bekanntmachung des Hinweises auf die Patenterteilung: **13.05.2020**
(21) Anmeldenummer: 17732928.1
(22) Anmeldetag: 27.06.2017
(51) Int. Cl.: B22D 11/111, C04B 35/16

(54) **WÄRMEDÄMMENDE PLATTE, INSBESONDERE ABDECKPLATTE FÜR METALLSCHMELZEN, SOWIE VERFAHREN ZUR HERSTELLUNG DER PLATTE UND DEREN VERWENDUNG**
HEAT INSULATING PANEL, PARTICULARLY A COVER PANEL FOR MOLTEN METALS, AND METHOD FOR PRODUCING THE PANEL AND USE OF SAME
PLAQUE D'ISOLATION THERMIQUE, NOTAMMENT PLAQUE PROTECTRICE POUR MÉTAL EN FUSION, ET PROCÉDÉ DE FABRICATION DE LA PLAQUE ET LEUR UTILISATION

(30) Priorität: 30.06.2016 DE 102016112039
(43) Veröffentlichungstag der Anmeldung: 08.05.2019
(73) Patentinhaber: Refratechnik Holding GmbH, 85737 Ismaning (DE)
(72) Erfinder: JANSEN, Helge, Prof. Dr., 40547 Düsseldorf (DE); SCHEMMEL, Thomas, Dr., 40668 Meerbusch (DE); STEIN, Petra, Dr., 37079 Göttingen (DE); SCHÖLWER, Michael, 42551 Velbert (DE)
(74) Vertreter: Patent- und Rechtsanwälte Dr. Solf & Zapf
(86) Internationale Anmeldenummer: PCT/EP2017/065919
(87) Internationale Veröffentlichungsnummer: WO 2018/002094

(56) Entgegenhaltungen:
- CN-A- 1 594 197
- GB-A- 2 347 143
- JP-A- S57 202 950

## Beschreibung

Die vorliegende Erfindung betrifft eine wärmedämmende Platte auf Basis von mit einem Bindemittel gebundener biogener Kieselsäure, bevorzugt Reisschalenasche, sowie ein Verfahren zur deren Herstellung und deren Verwendung.

Die vorliegende Erfindung betrifft insbesondere eine Abdeckplatte für Metallschmelzen, insbesondere für Stahlschmelzen, sowie ein Verfahren zur deren Herstellung und deren Verwendung.

In der Metallurgie ist es üblich, die freie Oberfläche der sich in einem offenen metallurgischen Gefäß befindlichen Metallschmelze, insbesondere der Stahlschmelze, mit einem Abdeckmittel abzudecken. Das Abdeckmittel bildet eine Schutz- und Wärmedämmschicht. Es schirmt einerseits das Metallschmelzbad vor atmosphärischen Gasen ab, um unerwünschte chemische Reaktionen der Metallschmelze zu vermeiden. Andererseits dient es zur Isolation bzw. Wärmedämmung. Somit sorgt das Abdeckmittel für eine gute Oberflächenqualität.

Als Abdeckmittel werden üblicherweise lose Schüttungen aus feuerfesten Materialien, insbesondere aus Reisschalenasche verwendet. Reisschalenasche wird in großen Mengen in vielen Reis produzierenden Ländern hergestellt. Sie fällt als Nebenprodukt bei der Verbrennung von Reisschalen (Spelzen) an. Wenn diese verbrannt werden, entsteht Reisschalenasche, die chemisch sehr rein ist und zu 94-96% aus SiO₂ in amorpher Form besteht. Reisschalenasche wird deshalb auch als biogene Kieselsäure bezeichnet. Sie hat einen sehr hohen Schmelzpunkt von ca. 1.650 °C. Bei der Herstellung verbrennen die flüchtigen Bestandteile, wobei aber eine einzigartige, mikroporöse Struktur des SiO₂ erhalten bleibt. Aus dieser Struktur resultiert sowohl eine extrem niedrige Wärmeleitfähigkeit als auch ein niedriges Schüttgewicht der Reisschalenasche. Reisschalenasche bewirkt aufgrund dessen zwar eine hervorragende Wärmedämmung, allerdings führt sie aufgrund ihrer hohen Feinheit, insbesondere beim Aufbringen auf die Metallschmelzenoberfläche zu einer hohen Staubbelastung, die gesundheitsgefährdend sein kann. Denn die Feinstaubpartikel können in den menschlichen Körper gelangen und z.B. Augenverletzungen hervorrufen. Deshalb müssen beispielsweise Absaugeinrichtungen installiert werden, welche wiederum aufgrund des Absaugens der Reisschalenasche zu Materialverlusten führen.

Aus diesem Grund, ist es auch bekannt, anstelle der reinen Reisschalenasche, Granulate als Abdeckmittel zu verwenden. Die Granulate bestehen aus granulierten feuerfesten Materialien, die mittels eines Bindemittels verfestigt sind. Beispielsweise gehen derartige Granulate aus der DE 10 2013 000 527 A1, der DE 197 28 368 C1 und der DE 197 31 653 C2 hervor.

Die Granalien der DE 10 2013 000 527 A1 enthalten hauptsächlich, vorzugsweise bis zu 90 Gew.-%, Kieselgur. Als Bindemittel wird z.B. Bentonit, Wasserglas oder Zellulose verwendet. Auch können die Granalien Polyvinylpolypyrrolidon als Bindemittel enthalten. Das Granulat schmilzt nach einiger Zeit auf.

Das Granulat der DE 197 28 368 C1 weist Granalien auf, die hergestellt werden aus Reisschalenasche, einem organischen, gelbildenden Bindemittel in Mengen von 1 bis 10 Gew.-% sowie Wasser in Mengen von 20 bis 100 Gew.-%.

Die Kügelchen/Pellets des Granulats der DE 197 31 653 C2 bestehen aus Reisschalenasche, die mit einer oberflächenaktiven Substanz und einem Bindemittel gemischt wird. Bei der oberflächenaktiven Substanz kann es sich um Natriumalginat, Natriumsalz von Carboxymethylcellulose, Natriumhexametaphosphat oder Mischungen daraus handeln. Bei dem Bindemittel kann es sich um Polyvinylalkohol, Melasse, Natriumhexametaphosphat, Portland-Zement, Natriumsilikat und ausgefälltes Calciumcarbonat und Mischungen daraus handeln. Die Kügelchen/Pellets werden nach dem Mischen und Verpressen getrocknet und dann bei einer Temperatur von 800-1400 °C gebrannt.

Die Granulate führen zwar zu einer deutlich verringerten Staubbelastung im Vergleich zu reiner Reisschalenasche. Sie weisen aber auch ein höheres Schüttgewicht auf und führen somit zu einer schlechteren Isolation. Zudem sind sie herstellungsbedingt deutlich teurer als Schüttungen aus reiner Reisschalenasche.

Bei den abzudeckenden metallurgischen Gefäßen handelt es sich insbesondere um einen Metallverteiler, bevorzugt einen Stranggießverteiler (Tundish), eine Gießpfanne oder eine Kokille für den steigenden Blockguss. Beim Blockguss wird das flüssige Metall in eine stehende Form (Kokille) eingefüllt und erstarrt in dieser. Das Einfüllen kann sowohl von oben als auch über ein Zuführsystem von unten (steigend) geschehen. Nach dem Erstarren wird die Kokille gestrippt, also vom erstarrten Metall gezogen und der Gussblock wird weiterverarbeitet.

Beim steigenden Blockguss bei der Stahlerzeugung wird üblicherweise zunächst eine Halteplatte oder Metallstange auf die Kokille aufgelegt. Die Halteplatte besteht in der Regel aus wärmeliefernden Materialien (sog. "exotherme Platte) aus Mischungen von verschiedenen feuerfesten Oxiden mit Metallpulver und häufig fluoridhaltigen Komponenten. An der Halteplatte oder der Metallstange ist mittels eines Strickes ein Sack mit Gießpulver befestigt. Der Sack verbrennt nach kurzer Zeit aufgrund der hohen Wärme der Stahlschmelze, so dass sich das Gießpulver auf der Stahlschmelze verteilt und zwischen der Kokille und dem Stahlbad als Trennmittel wirkt. Anschließend wird die Halteplatte oder die Metallstange entfernt und manuell die jeweilige Schüttung als Abdeckmittel auf die Metallschmelzenoberfläche aufgegeben. Dieses Verfahren ist sehr aufwendig und durch die unmittelbare Nähe zur heißen Kokille für den Ausführenden gefährlich.

Die GB 2 347 143 A offenbart eine Zusammensetzung für die Herstellung eines thermisch isolierenden feuerfesten Produkts mit biogener Kieselsäure, Fasermaterial und einem Bindemittel, wobei die biogene Kieselsäure im Wesentlichen frei von Cristobalit ist. Als Bindemittel sind z.B. Kieselsol und Stärke enthalten. Aus der Zusammensetzung kann mit Wasser ein Schlicker hergestellt werden, der für die Herstellung verschiedener metallurgischer Gefäße verwendet werden kann.

Die JP S 57-202950 A offenbart ein Abdeckmittel für ein Stahlschmelze in Form einer gepressten Platte aus Kieselerde mit Wasserglas oder einem organischen Harz als Binder.

Aufgabe der vorliegenden Erfindung ist die Bereitstellung einer auf Reisschalenasche basierenden, Platte, die eine gute Wärmedämmung sowohl bei niedrigen als auch bei hohen Temperaturen gewährleistet.

Aufgabe der vorliegenden Erfindung ist insbesondere die Bereitstellung einer Abdeckplatte zum Abdecken der freien Oberfläche eines Metallbades, insbesondere eines Stahlbades, in einem oben offenen, metallurgischen Gefäß, die eine gute Wärmeisolierung und möglichst geringe Staubbelastung gewährleistet und einfach aufzubringen ist.

Weitere Aufgabe ist die Bereitstellung eines einfachen und kostengünstigen Verfahrens zur Herstellung einer derartigen Platte.

Diese Aufgaben werden durch eine Platte mit den Merkmalen von Anspruch 1 sowie ein Verfahren mit den Merkmalen von Anspruch 14 gelöst. Vorteilhafte Weiterbildungen der Erfindung sind in den sich jeweils anschließenden Unteransprüchen gekennzeichnet.

Gemäß einer bevorzugten Ausführungsform bestehen die die biogene Kieselsäure aufweisenden Zuschlagkörner aus agglomerierten Körnern aus der biogenen Kieselsäure, welche mit zumindest einem abgebundenen Bindemittel gebunden sind.

Bei einem bevorzugten Verfahren werden die Zuschlagkörner aus der biogenen Kieselsäure vor dem Mischen mit den übrigen Bestandteilen der Mischung mit Wasser und/oder zumindest einem Bindemittel zu Granulatkörnern agglomeriert und die Granulatkörner in plastischem Zustand mit den übrigen Bestandteilen der Mischung gemischt.

Im Folgenden wird die Erfindung anhand einer Zeichnung beispielhaft näher erläutert. Es zeigen:
- Figur 1:: Schematisch einen Querschnittsausschnitt durch die erfindungsgemäße Platte
- Figur 2:: Schematisch und stark vereinfacht eine Kokille für den aufsteigenden Blockguss vor Beginn des Gießvorgangs
- Figur 3:: Die Kokille gemäß Figur 2 während des Gießvorganges
- Figur 4:: Die Kokille gemäß Figur 2 am Ende des Gießvorgangs
- Figur 5:: Schematisch und stark vereinfacht einen Gießverteiler vor dem Anguss
- Figur 6:: Den Gießverteiler gemäß Figur 5 nach dem Anguss

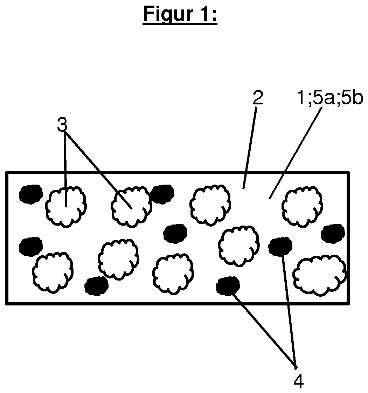

Die erfindungsgemäße Platte 1 (Fig. 1-6) weist eine Bindemittelmatrix 2 aus einem abgebundenen Bindemittel auf, in welches Zuschlagkörner 3 aus biogener Kieselsäure, bevorzugt aus Reisschalenasche, eingebettet bzw. eingebunden sind. Die Zuschlagkörner 3 sind in der Bindemittelmatrix 2 verteilt. Gemäß einer bevorzugten Ausführungsform der Erfindung handelt es sich bei dem Bindemittel um ein organisches, temporäres Bindemittel. Bzw. die Bindemittelmatrix 2 besteht gemäß der bevorzugten Ausführungsform ausschließlich aus einem oder mehreren temporären Bindemitteln. Es wurde überraschenderweise festgestellt, dass es aufgrund des organischen, temporären Bindemittels möglich ist, die Platte so zu konfigurieren, dass ab Erreichen einer bestimmten Grenztemperatur das Bindemittel so ausbrennt, dass die Platte 1 zerfällt und eine lose Schüttung bzw. ein Schüttgut entsteht. Schüttgut bzw. Schüttung bezeichnet ein körniges oder auch stückiges Gemenge, das in einer schüttfähigen bzw. rieselfähigen Form vorliegt. Das heißt, aus der Platte 1 wird durch Ausbrennen des Bindemittels ein rieselfähiges Material.

Vorzugsweise brennt das Bindemittel vollständig und rückstandslos aus, so dass nach dem Ausbrennen eine lose, rieselfähige Schüttung aus der reinen Reisschalenasche entsteht.

Bei dem temporären organischen Bindemittel handelt es sich vorzugsweise um ein Polymer, bevorzugt ein Polysaccharid, das durch Polykondensation abbindet und in der jeweiligen Atmosphäre, insbesondere in einer Sauerstoffatmosphäre, vollständig, das heißt rückstandlos, verbrennt. Es handelt sich also um ein vollständig ausbrennbares Bindemittel. Die Bindemittelmatrix kann selbstverständlich auch aus mehreren temporären, organischen Bindemitteln bestehen. Dadurch können in besonders vorteilhafter Weise sowohl der Temperaturbereich als auch die Zeit, in dem bzw. der die Platte 1 zerfällt variabel eingestellt werden.

Vorzugsweise handelt es sich bei dem temporären Bindemittel um Cellulose, bevorzugt Methylcellulose, und/oder um Polyvinylalkohol, bevorzugt Polyvinylacetat und/oder Polyvinylpyrrolidon, und/oder um Ligninsulfonat. Es kann sich aber auch um ein Kunstharz handeln, welches in Sauerstoffatmosphäre vollständig ausbrennt.

Die Temperatur, bei der die Platte 1 anfängt zu zerfallen, und die Zeitspanne, bis die Platte 1 vollständig zerfallen ist, hängen dabei von unterschiedlichen Faktoren und nicht nur von der Art, insbesondere dessen Zündtemperatur, und dem Anteil des temporären Bindemittels ab. Außerdem hängen die Temperatur und die Zeitspanne unter anderem auch von der Plattendicke und der Porosität ab. Außerdem hat die Art der Temperaturbelastung (z.B. einseitig oder allseitig) einen Einfluss.

Über die unterschiedlichen Faktoren ist die Temperatur variabel einstellbar. Die erfindungsgemäße Platte 1 zerfällt vorzugsweise ab einer Temperatur von ≥ 150°C und ≤ 800°C, bevorzugt ≥ 200°C und ≤ 400°C.

Im Rahmen der Erfindung wird die Zerfallstemperatur als diejenige Temperatur definiert, ab der die Platte innerhalb von 30 min vollständig zu einer Schüttung zerfällt.

Der Zerfall der Platten 1 wird dabei in einem Laborofen unter Sauerstoffatmosphäre getestet. Der Ofen wird auf eine Starttemperatur, also insbesondere 150°C oder 200°C, aufgeheizt. Es wird eine Platten-Probe mit den Abmessungen 50 x 50 x 50 mm³ in den Ofen gelegt und die Temperatur für 30 min gehalten.

Tritt der vollständige Zerfall innerhalb der 30 min ein, wird der Probekörper wieder entnommen und der Ofen, insbesondere um 50 °C, abgekühlt und jeweils für 30 min gehalten.

Tritt der vollständige Zerfall innerhalb der 30 min nicht ein, wird der Probekörper wieder entnommen und der Ofen, insbesondere in 50 °C -Schritten, weiter aufgeheizt und jeweils für 30 min gehalten.

Bei jeder Haltezeit wird ein neuer Probekörper eingesetzt und das Zerfallsverhalten beobachtet.

Bei der biogenen Kieselsäure handelt es sich vorzugsweise ausschließlich um Reisschalenasche. Es kann sich aber auch um Diatomeenerde (Kieselgur) oder Kieselschiefer oder diagenetisch zu Gestein verfestigte Radiolarienskelette oder Schwämme aus Opal handeln. Es können auch Mischungen unterschiedlicher biogener Kieselsäuren als Zuschlagstoff vorhanden sein.

Gemäß der Erfindung weist die erfindungsgemäße Platte 1 zudem zumindest ein Blähmittel bzw. Treibmittel bzw. Zerfallsmittel bzw. Sprengmittel als Zuschlagstoff auf, welches unter Temperaturbelastung auf ein Vielfaches seines Ursprungsvolumens expandiert. Das Sprengmittel bzw. dessen Zuschlagkörner 4 sind ebenfalls in der Bindemittelmatrix 2 verteilt und in diese eingebunden bzw. eingebettet. Das Sprengmittel unterstützt den Zerfall der Platte 1 dadurch, dass es bei Erreichen einer bestimmten Temperatur > 150°C expandiert und dadurch die Bindemittelmatrix sprengt. Das Sprengmittel wird dabei insbesondere so ausgewählt, dass die Expansionstemperatur im Bereich der Zündtemperatur des Bindemittels liegt. Die Zündtemperatur ist diejenige Temperatur, auf die man einen Stoff oder eine Kontaktoberfläche erhitzen muss, damit sich eine brennbare Substanz in Gegenwart von Luft ausschließlich aufgrund seiner Temperatur, also ohne Zündquelle wie einen Zündfunken, selbst entzündet.

Da die Platte 1 zumindest ein Sprengmittel enthält, muss die Bindemittelmatrix 2 nicht ausschließlich aus einem oder mehreren temporären Bindemitteln bestehen, um den Zerfall der Platte zu gewährleisten, auch wenn dies bevorzugt ist. Sie kann auch zumindest ein permanentes, abgebundenes Bindemittel enthalten oder aus permanentem(n) abgebundenem(n) Bindemittel(n) bestehen.

Vorzugsweise handelt es sich bei dem Sprengmittel um Blähgraphit. Vorteil des Blähgraphits ist, dass er in Sauerstoff bei hohen Temperaturen rückstandslos zu Kohlendioxid verbrennt, welches sich verflüchtigt. In diesem Fall bleibt nach dem Verbrennen des Bindemittels und des Sprengmittels ausschließlich die biogene Kieselsäure, insbesondere die Reisschalenasche, als lose bzw. rieselfähige Schüttung zurück.

Es kann sich bei dem Sprengmittel aber auch um Rohperlit (nicht expandierten Perlit) oder nicht expandierten Vermiculit oder ungeblähten Ton oder Kunststoffharze, bevorzugt Harnstoff-Formaldehyd und/oder Melaminformaldehydharze, und/oder Melamin-Phosphorsäure-Verbindungen, wie z.B. Monomelaminphosphat, oder Mittel aus anderen intumeszenten Materialien handeln.

Des Weiteren kann die Platte 1 auch weitere Zuschlagstoffe aus feuerfestem Material aufweisen. Zuschlagstoffe im Sinne der Erfindung sind allgemein Stoffe, die bzw. deren Körner in der Bindemittelmatrix verteilt sind und in diese eingebunden bzw. eingebettet sind. Die Zuschlagstoffe reagieren dabei beim Abbinden nicht oder nur oberflächlich mit dem Bindemittel. Sie sind im Wesentlichen mechanisch in die Bindemittelmatrix 2 eingebettet.

Insbesondere weist die Platte 1 Mikrosilika, bevorzugt pyrogene und/oder gefällte Kieselsäure, auf. Auch kann die Platte 1 expandierten Perlit und/oder expandierten Vermiculit und/oder geblähtem Ton und/oder anorganische Fasern, bevorzugt Mineral- und/oder Schlacken- und/oder Glas- und/oder Keramik-Fasern, und/oder Flugaschen und/oder (Kraftwerks-) Filterstäube als Zuschlagstoff aufweisen.

Vorzugsweise besteht der Zuschlag der erfindungsgemäßen Platte 1 zu mindestens 50 Gew.-%, bevorzugt zu mindestens 80 Gew.-%, besonders bevorzugt zu mindestens 90 Gew.-%, aus biogener Kieselsäure, bevorzugt aus Reisschalenasche, jeweils bezogen auf den Gesamtgehalt (Trockenmasse) an Zuschlagstoffen. Vorteilhafterweise weist die erfindungsgemäße Platte 1 aber, abgesehen vom Sprengmittel, ausschließlich biogene Kieselsäure, bevorzugt ausschließlich Reisschalenasche, als Zuschlagstoff auf. Der Zuschlag der erfindungsgemäßen Platte 1 besteht somit vorteilhafterweise zu 100 Gew.-% aus biogener Kieselsäure und Sprengmittel, bevorzugt zu 100 Gew.-% aus Reisschalenasche und Sprengmittel.

Der Anteil an Sprengmittel bezogen auf den Gesamtgehalt (Trockenmasse) an Zuschlagstoffen beträgt vorzugsweise 0,5 bis 10,0 Gew.-%, bevorzugt 1,0 bis 5,0 Gew.-%.

Die Herstellung der erfindungsgemäßen Platte 1 erfolgt wie folgt:
Zunächst werden die trockenen Bestandteile gemischt. Bei den trockenen Bestandteilen handelt es sich um die biogene Kieselsäure und gegebenenfalls die anderen Zuschlagstoffe, zumindest ein Sprengmittel, sowie gegebenenfalls zumindest ein, bevorzugt temporäres, Bindemittel, falls dieses in trockener Form vorliegt. Anschließend wird der Trockenmischung Wasser oder ein anderes flüssiges Lösungsmittel zum Lösen des Bindemittels zugegeben. Zumindest ein Bindemittel kann aber auch in bereits gelöster Form vorliegen und der Trockenmischung aus den übrigen Bestandteilen in flüssiger Form zugegeben werden. Die einzelnen Bestandteile können grundsätzlich in beliebiger Reihenfolge gemischt werden.

Die Zusammensetzung der fertigen Mischung wird vorzugsweise so eingestellt, dass die Mischung nach 30 s unter Vibration ein Ausbreitmaß, bestimmt in Anlehnung an DIN EN ISO 1927-4 (03/2013), von 200 bis 500 mm, bevorzugt 250 bis 350 mm aufweist, ohne dass eine Auftrennung zwischen Grob- und Feinkornanteilen auftritt, wie dies bei reiner Reisschalenasche der Fall ist. Vorzugsweise weist die fertige Mischung bzw. weist der Versatz zur Herstellung der Platte 1 bezüglich der trockenen Bestandteile folgende Zusammensetzung bezogen auf die gesamte Trockenmasse auf, wobei sich die einzelnen Bestandteile zu 100 Gew.-% ergänzen:

| | **Anteil [Gew.-%]** | |
|---|---|---|
| | | vorzugsweise |
| Temporäres Bindemittel | 5,0 bis 30,0 | 10,0 bis 20,0 |
| Biogene Kieselsäure, vorzugsweise Reisschalenasche | 35,0 bis 94,5 | 57,0 bis 89,0 |
| Sprengmittel, vorzugsweise Blähgraphit | 0,5 bis 5,0 | 1,0 bis 3,0 |
| Weitere Zuschlagstoffe | 0 bis 20,0 | 0 bis 10,0 |
| Sonstige Bestandteile | 0 bis 10,0 | 0 bis 10,0 |

Des Weiteren beträgt das Gewichtsverhältnis des flüssigen Lösungsmittels, vorzugsweise des Wassers, zu den trockenen Bestandteilen vorzugsweise 2:1 bis 1:9, bevorzugt 1:1 bis 3:7.

Die verwendete Reisschalenasche weist zudem vorzugsweise folgende chemische Zusammensetzung gemäß DIN EN ISO 12677 (02/2013) auf, wobei sich die einzelnen Bestandteile (glühverlustfrei) zu 100 Gew.-% addieren:

| | **Anteil [Gew.-%]** | |
|---|---|---|
| | | vorzugsweise |
| SiO₂ | 92 bis 98 | 94 bis 97 |
| P₂O₅ | 0,5 bis 2,0 | 0,5 bis 1,5 |
| K₂O | 1,0 bis 3,0 | 1,5 bis 2,5 |
| Rest-Oxide | 0,5 bis 3,0 | 1,0 bis 2,0 |

Die verwendete biogene Kieselsäure, insbesondere die Reisschalenasche, weist außerdem vorzugsweise folgende Kornverteilung gemäß DIN 66165-2 (04/1987) bezogen auf die Trockenmasse auf, wobei sich die einzelnen Bestandteile zu 100 Gew.-% addieren:

| **Korngröße [mm]** | **Anteil [Gew.-%]** | |
|---|---|---|
| | | vorzugsweise |
| ≥ 2,0 | 0 bis 3,0 | 0,01 bis 0,5 |
| < 2,0-1,0 | 0,05 bis 4,0 | 0,1 bis 2,0 |
| < 1,0-0,5 | 1,0 bis 40,0 | 1,5 bis 35,0 |
| < 0,5-0,3 | 3,95 bis 40,0 | 8,39 bis 30,0 |
| < 0,3 | 30,0 bis 95,0 | 40,0 bis 90,0 |

Das Schüttgewicht gemäß DIN EN 1097-3 (06/1998) der verwendeten biogene Kieselsäure, insbesondere der Reisschalenasche, beträgt vorzugsweise 0,05 bis 0,5 g/cm³, bevorzugt 0,1 bis 0,4 g/cm³.

Die fertige Mischung wird anschließend in eine Form gegeben und in dieser verdichtet. Das Verdichten erfolgt insbesondere mittels Auflastvibration oder uniaxialem Pressen.

Bei der Auflastvibration befindet sich die Form auf einem Vibrationstisch. Auf die sich in der Form befindliche fertige Mischung wird ein Gewicht aufgelegt, der Vibrationstisch aktiviert und die Mischung mittels Vibration verdichtet. Mittels Auflastvibration werden in der Regel kleinere Plattenformate hergestellt.

Beim uniaxialen Pressen wird die mit der fertigen Mischung befüllte Form in eine Presse eingelegt, wobei auf die Mischung eine Deckplatte aufgelegt wird. Dann wird der Oberstempel der Presse gegen die Deckplatte gefahren und die Mischung so mit bestimmtem Druck verdichtet. Vorzugsweise werden mehrere Presshübe durchgeführt. Mittels uniaxialem Pressen werden in der Regel größere Plattenformate hergestellt.

Nach dem Verdichten wird die grünfeste Platte entformt und Abbinden gelassen. Das Abbinden lassen erfolgt insbesondere bei 110 bis 200 °C für vorzugsweise 4 bis 12 h. Insbesondere wird bei einer Temperatur unterhalb der Zündtemperatur des Bindemittels und unterhalb der Blähtemperatur des Sprengmittels getrocknet. Zudem wird die Temperatur so gewählt, dass das Bindemittel abbindet bzw. erhärtet.

Die erfindungsgemäße Platte 1 weist dann vorzugsweise eine Trockenrohdichte po von 0,3 bis 1,5 g/cm³, bevorzugt von 0,5 bis 1,3 g/cm³ gemäß DIN EN 1094-4 (09/1995) auf.

Zudem weist die Platte 1 vorzugsweise eine Porosität von 60 bis 90 %, bevorzugt von 70 bis 80 % gemäß DIN EN 1094-4 (09/1995) auf.

Die Kaltdruckfestigkeit der erfindungsgemäßen Platte 1 liegt vorzugsweise bei 3,0 bis 25,0 MPa, bevorzugt bei 5,0 bis 20,0 MPa gemäß DIN EN 993-5 (12/1998).

Die Kaltbiegefestigkeit der erfindungsgemäßen Platte 1 liegt vorzugsweise bei 1,5 bis 10,0 MPa, bevorzugt bei 2,0 bis 8,0 MPa gemäß DIN EN 993-6 (04/1995).Außerdem weist die Platte 1 vorzugsweise folgende Wärmeleitfähigkeiten gemäß DIN EN 993-15 (07/2005) auf:

| | **WLF [W/mK]** | |
|---|---|---|
| | | vorzugsweise |
| bei 26°C | 0,10 bis 0,14 | 0,11 bis 0,13 |
| bei 307°C | 0,12 bis 0,16 | 0,13 bis 0,15 |

Die erfindungsgemäße Platte 1 kann in besonders vorteilhafter Weise als Abdeckplatte 5a;b zum Abdecken einer freien Oberfläche 6a eines Metallbades 6 in einem oben offenen, metallurgischen Gefäß verwendet werden.

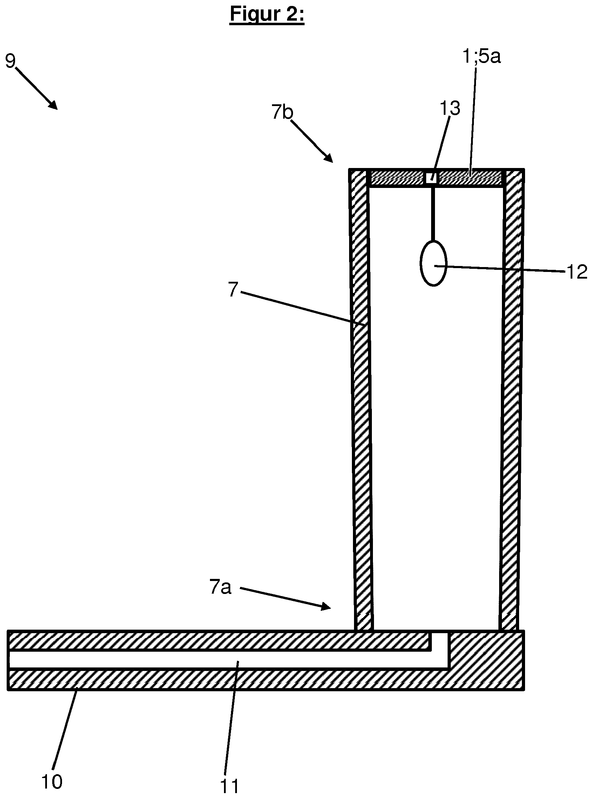

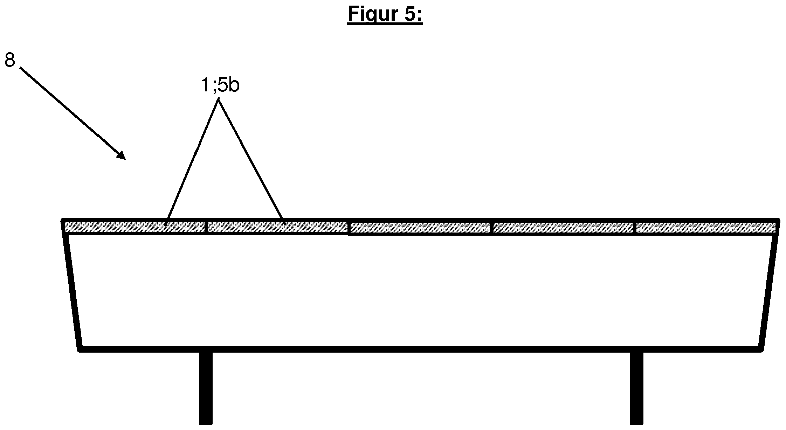

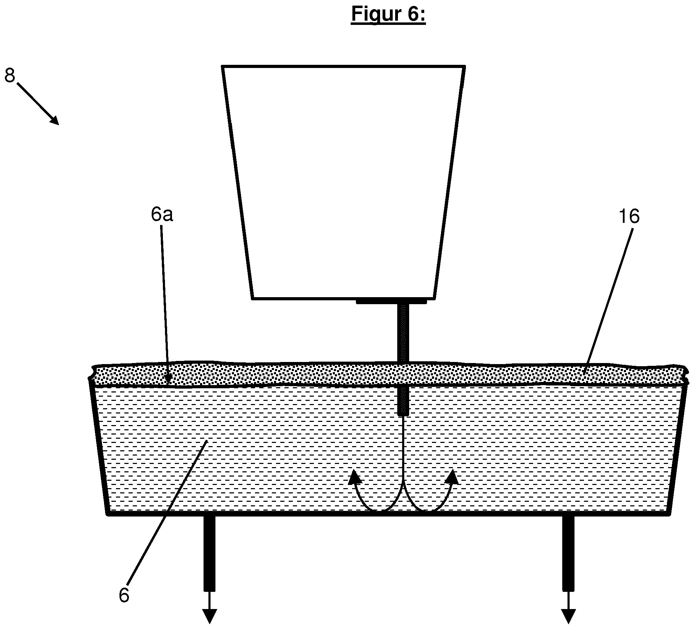

Bei dem abzudeckenden metallurgischen Gefäß handelt es sich insbesondere um eine Kokille 7 (Fig. 2-4) für den, insbesondere steigenden, Blockguss oder einen Gießverteiler 8 (Fig. 5 und 6), bevorzugt einen Stranggießverteiler (Tundish) oder eine Gießpfanne.

Ein Stahlwerk weist für den steigenden Blockguss von Metall, insbesondere von Stahl, üblicherweise ein Untergestell 10 mit einem Gießkanal 11 zum Zuführen des geschmolzenen Metalls, insbesondere des Stahls, auf. Zudem weist die Vorrichtung 9 die Kokille 7 zur Aufnahme des Metallbades 6 auf. Die Kokille 7 weist ein unteres und ein oberes, offenes Kokillenende 7a;b auf. Das obere Kokillenende 7b bildet einen Kokillenkopf der Kokille 7.

Die erfindungsgemäße Abdeckplatte 5a wird vor Beginn des Blockgusses (Fig. 2) am oberen, offenen Kokillenende 7b der Kokille 7 befestigt. Das Metallbad 8 wird somit durch die Abdeckplatte 5a zunächst indirekt, also ohne direkten Kontakt, thermisch isoliert. An der Abdeckplatte 5a ist ein mit Gießpulver befüllter Gießpulversack 12 derart befestigt, dass er von der Abdeckplatte 5a herunter hängt, in die Kokille 7 hinein. Zur Befestigung des Gießpulversackes 12 weist die Abdeckplatte 5a vorzugsweise eine von der einen zur anderen Plattenoberfläche durchgehende, mittige Aussparung 13 auf.

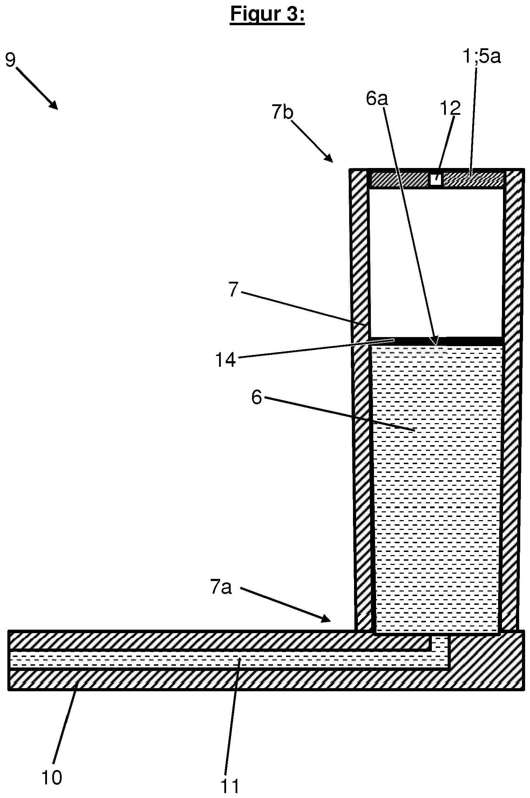

Nun wird die Metallschmelze, insbesondere die Stahlschmelze, durch den Gießkanal 11 von unten in die Kokille 7 eingefüllt und steigt in dieser nach oben (Fig. 3). Das Metallbad 6, insbesondere das Stahlbad, weist in der Regel eine Temperatur von ca. 1550°C auf. Der Gießpulversack 12 verbrennt deshalb nach kurzer Zeit aufgrund der hohen Wärme der Stahlschmelze, so dass sich das Gießpulver auf einer Metallbadoberfläche 6a verteilt und eine oberflächliche Gießpulverschicht 14 bildet. Das Gießpulver verteilt sich zudem zwischen der Kokille 7 und dem Metallbad 6 und wirkt als Trennmittel.

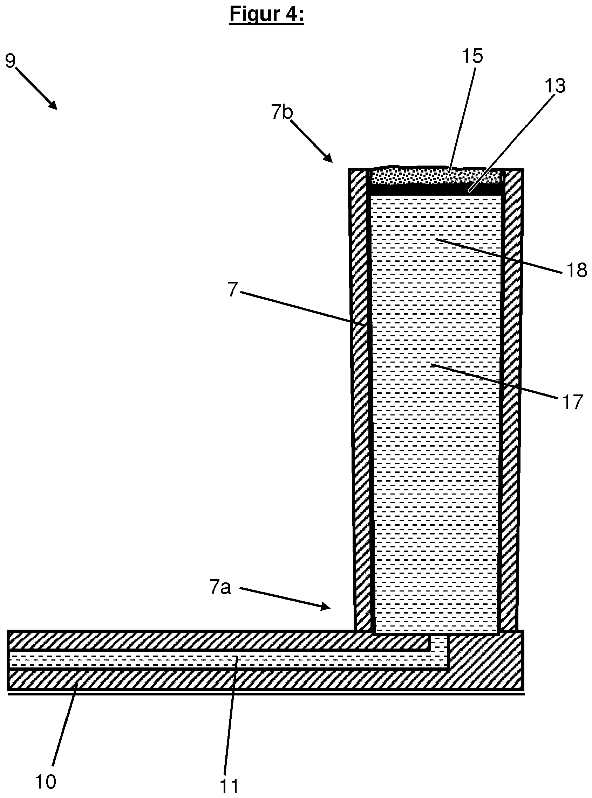

Während des Angusses steigt das Metallbad 6 bis zu den Abdeckplatten 5a an und bildet einen erstarrenden Gussblock 17 mit einem oberen Blockkopf 18. Die Abdeckplatte 5a zerfällt spätestens nach direktem Kontakt mit dem Metallbad 6 aufgrund der hohen Temperatur des Metallbades 6 und bildet eine die Metallbadoberfläche 6a bzw. den Blockkopf 18 abdeckende und isolierende, durchgehende Abdeckschicht 16 aus rieselfähigem feuerfestem Material (Fig. 4). Sie besteht aus einer losen Schüttung aus den feuerfesten Zuschlagstoffen und ist auf der Gießpulverschicht 14 angeordnet.

Das Zerfallen der Abdeckplatte 5a wird einerseits durch das Verbrennen des temporären Bindemittels und andererseits durch das Expandieren des Sprengmittels ausgelöst. Vorzugsweise besteht die lose Schüttung der Abdeckschicht 15 aus der biogenen Kieselsäure, bevorzugt aus der Reisschalenasche. Die Abdeckschicht 15 sorgt nun in an sich bekannter Weise für die Abschirmung der Metallbadoberfläche 6a von der Atmosphäre und für eine hervorragende Wärmedämmung. Die Abdeckschicht 16 isoliert den Blockkopf 18 von der Atmosphäre und sorgt dadurch für eine langsame Abkühlung des Blockkopfes 18. Am Ende des Gießvorganges wird die lose Schüttung in an sich bekannter Weise entfernt, z.B. abgesaugt.

Wie bereits erläutert, kann die erfindungsgemäße Abdeckplatte 5b auch zur Abdeckung der Metallbadoberfläche 6a in einem Gießverteiler 8 (Fig. 5 und 6) verwendet werden. Vor dem Anguss wird der Gießverteiler 8 vorzugsweise mit mehreren Abdeckplatten 5b abgedeckt (Fig. 5). Während des Angusses steigt das Metallbad 6 bis zu den Abdeckplatten 5b an. Die Abdeckplatten 5b zerfallen spätestens nach direktem Kontakt mit dem Metallbad 6 aufgrund der hohen Temperatur des Metallbades 6 und bilden eine die Metallbadoberfläche 6a abdeckende, durchgehende Abdeckschicht 16 aus rieselfähigem feuerfestem Material (Fig. 6).

Vorteil der erfindungsgemäßen Abdeckplatte 5a;b ist, dass die Staubbelastung deutlich reduziert ist. Das Auflegen der Abdeckplatten 5a;b auf die Kokille 7 bzw. den Gießverteiler 8 ist zudem deutlich einfacher als das Aufbringen einer losen Schüttung auf die Metallbadoberfläche. Zudem kann dies vor dem Einfüllen der Metallschmelze erfolgen, was für den jeweiligen Arbeiter eine deutlich geringere Temperaturbelastung bedeutet. Im Rahmen der Erfindung liegt es aber selbstverständlich auch, die Abdeckplatte 5a;b direkt auf die Metallschmelze aufzubringen.

Zudem entfällt bei der Verwendung der Abdeckplatte 5a als Halteplatte für den Gießpulversack 12 ein zusätzlicher Verfahrensschritt. Denn ein Entfernen der

Halteplatte und das anschließende Aufbringen der losen Reisschalenasche entfällt.

Die erfindungsgemäße Platte 1 weist außerdem sowohl in Plattenform bei niedrigen Temperaturen als auch bei hohen Temperaturen in rieselfähiger Form hervorragende wärmedämmende Eigenschaften auf. Insbesondere bei der Blocckopfabdeckung im steigenden Blockguss gewährleistet dies eine konstant gute Blockkopfqualität. Die gute Wärmedämmung resultiert insbesondere aus den sehr guten wärmedämmenden Eigenschaften der biogenen Kieselsäure und deren sehr hohem Schmelzpunkt von ca. 1650 °C.

Des Weiteren ist die erfindungsgemäße Platte 1 schadstofffrei. Außerdem handelt es sich bei der Reisschalenasche um ein natürliches Recyclingprodukt.

Aufgrund dessen ist die erfindungsgemäße Platte 1 vorteilhaft auch für andere Anwendungen einsetzbar:
Beispielsweise kann die erfindungsgemäße Platte 1 als Brandschutzplatte, z.B. zur Verfüllung von Hohlräumen verwendet werden. Im Brandfall zerfällt die Platte 1 und dichtet die Hohlräume vollständig ab, um ein Austreten heißer und giftiger Gase zu verhindern.

Im Rahmen der Erfindung liegt es auch, als Zuschlagstoff anstelle oder zusätzlich zu der reinen biogenen Kieselsäure ein Granulat aus biogener Kieselsäure, insbesondere aus Reisschalenasche, zu verwenden. Die Granulatkörner bzw. die Zuschlagkörner bestehen in diesem Fall aus agglomerierten Körnern aus der biogenen Kieselsäure, welche mit einem abgebundenen Bindemittel gebunden sind. Die Zuschlagkörner 3 aus der reinen biogenen Kieselsäure , insbesondere Reisschalenasche, sind aber bevorzugt.

Auch kann die Herstellung vorteilhaft dadurch erfolgen, dass die biogene Kieselsäure, insbesondere die Reisschalenasche, vor dem Mischen mit den anderen Bestandteilen der Platte mit Wasser und/oder zumindest einem Bindemittel granuliert wird und das weiche bzw. plastische, noch nicht abgebundene Granulat den übrigen Bestandteilen zugemischt wird. Vorzugsweise handelt es sich bei dem Bindemittel um dasselbe Bindemittel bzw. dieselben Bindemittel, welches bzw. welche für die Platte verwendet wird bzw. werden. Beim Verdichten oder Pressen werden die plastischen Granulatkörner zerstört, so dass die Platte mit den Zuschlagkörnern aus der biogenen Kieselsäure entsteht. Vorteil dieser Verfahrensvariante ist, dass die Staubentwicklung geringer ist.

### Ausführungsbeispiel:

Es wurde eine erfindungsgemäße Platte aus einem Versatz mit folgender Zusammensetzung mittels uniaxialem Pressen hergestellt:

| | **Anteil [Gew.-%]** |
|---|---|
| Bindemittel (Dextrin-Zitronensäure-Kombination) | 40 |
| Reisschalenasche (NERMAT BF - E) | 59 |
| Blähgraphit (ES 350 F5) | 1,0 |

Die fertige Mischung wurde mit einem Flächengewicht von 0,5 N/mm² verdichtet. Die Platte wurde entformt und bei 110°C für 12 h im Trockenschrank auf einem Blech getrocknet. Die Platte wies folgende Maße auf: 500 x 500 x 50 mm³
Der Zerfall der hergestellten Platte wurde wie oben beschrieben bei 800°C Ofentemperatur getestet.

## Patentansprüche

1. Wärmedämmende Platte (1), bevorzugt Abdeckplatte (5a;b), insbesondere zur thermischen Isolation von Metallschmelzen, insbesondere Stahlschmelzen, in einem metallurgischen Gefäß (6), wobei die Platte (1) eine Bindemittelmatrix (2) aus zumindest einem abgebundenen Bindemittel und Zuschlagkörner (3) mit und/oder aus biogener Kieselsäure, vorzugsweise mit und/oder aus Reisschalenasche, aufweist, welche in die Bindemittelmatrix (2) eingebunden sind,
**dadurch gekennzeichnet, dass**
die Platte (1) als weiteren Zuschlagstoff zumindest ein Sprengmittel aufweist, welches unter Temperaturbelastung expandiert, vorzugsweise so dass die Platte (1) in eine lose, rieselfähige Schüttung zerfällt.

2. Wärmedämmende Platte (1) nach Anspruch 1,
**dadurch gekennzeichnet, dass**
die Bindemittelmatrix (2) aus zumindest einem, abgebundenen, temporären, organischen Bindemittel besteht oder zumindest ein, abgebundenes, temporäres, organisches Bindemittel aufweist.

3. Wärmedämmende Platte (1) nach Anspruch 2,
**dadurch gekennzeichnet, dass**
die Platte (1) so ausgebildet ist, dass das temporäre Bindemittel bei Temperaturbelastung ausbrennt und die Platte (1) in die lose, rieselfähige Schüttung zerfällt.

4. Wärmedämmende Platte (1) nach einem der vorhergehenden Ansprüche,
**dadurch gekennzeichnet, dass**
die Platte (1) ab einer Temperatur von ≥ 150°C und ≤ 800°C, bevorzugt ≥ 200°C und ≤ 400°C, zerfällt.

5. Wärmedämmende Platte (1) nach einem der Ansprüche 2 bis 4,
**dadurch gekennzeichnet, dass**
die Expansionstemperatur des Sprengmittels im Bereich der Zündtemperatur des temporären Bindemittels liegt.

6. Wärmedämmende Platte (1) nach einem der vorhergehenden Ansprüche,
**dadurch gekennzeichnet, dass**
es sich bei dem Sprengmittel um ein Mittel aus intumeszentem Material, vorzugsweise um Blähgraphit oder unexpandierten Perlit oder unexpandierten Vermiculit oder ungeblähten Ton oder Kunststoffharze, bevorzugt Harnstoff-Formaldehyd und/oder Melaminformaldehydharze und/oder Melamin-Phosphorsäure-Verbindungen, z.B. Monomelaminphosphat, handelt.

7. Wärmedämmende Platte (1) nach einem der Ansprüche 2 bis 6,
**dadurch gekennzeichnet, dass**
es sich bei dem temporären Bindemittel um ein Polymer, bevorzugt ein Polysaccharid, handelt, das durch Polykondensation abbindet und, vorzugsweise in einer Sauerstoffatmosphäre, rückstandlos verbrennt.

8. Wärmedämmende Platte (1) nach einem der Ansprüche 2 bis 7,
**dadurch gekennzeichnet, dass**
die Platte (1) als temporäres Bindemittel Cellulose, bevorzugt Methylcellulose, und/oder Polyvinylalkohol, bevorzugt Polyvinylacetat und/oder Polyvinylpyrrolidon, und/oder Ligninsulfonat aufweist.

9. Wärmedämmende Platte (1) nach einem der vorhergehenden Ansprüche,
**dadurch gekennzeichnet, dass**
es sich bei der biogenen Kieselsäure um Reisschalenasche und/oder um Diatomeenerde (Kieselgur) und/oder um Kieselschiefer und/oder diagenetisch zu Gestein verfestigte Radiolarienskelette und/oder Schwämme aus Opal handelt.

10. Wärmedämmende Platte (1) nach einem der vorhergehenden Ansprüche,
**dadurch gekennzeichnet, dass**
die Platte (1) als Zuschlagstoff ausschließlich biogene Kieselsäure und zumindest ein Sprengmittel aufweist, wobei es sich bei der biogenen Kieselsäure vorzugsweise ausschließlich um Reisschalenasche handelt.

11. Wärmedämmende Platte (1) nach einem der vorhergehenden Ansprüche,
**dadurch gekennzeichnet, dass**
die Platte (1) eine Trockenrohdichte ρ₀ von 0,3 bis 1,5 g/cm³, bevorzugt von 0,5 bis 1,3 g/cm³, gemäß DIN EN 1094-4 (09/1995) und/oder
eine Porosität von 60 bis 90 %, bevorzugt von 70 bis 80 %, gemäß DIN EN 1094-4 (09/1995) aufweist.

12. Wärmedämmende Platte (1) nach einem der vorhergehenden Ansprüche,
**dadurch gekennzeichnet, dass**
die Platte (1) eine Kaltdruckfestigkeit von 3,0 bis 25,0 MPa, bevorzugt von 5,0 bis 20,0 MPa, gemäß DIN EN 993-5 (12/1998) und/oder
eine Kaltbiegefestigkeit von 1,5 bis 10,0 MPa, bevorzugt von 2,0 bis 8,0 MPa, gemäß DIN EN 993-6 (04/1995) aufweist.

13. Wärmedämmende Platte (1) nach einem der vorhergehenden Ansprüche,
**dadurch gekennzeichnet, dass**
die Bindemittelmatrix (2) ein permanentes, abgebundenes Bindemittel enthält oder aus zumindest einem permanenten abgebundenen Bindemittel besteht.

14. Verfahren zur Herstellung einer wärmedämmenden Platte (1) nach einem der vorhergehenden Ansprüche,
**gekennzeichnet durch**
folgende Verfahrensschritte:
a) Herstellen einer Mischung aufweisend die Zuschlagkörner (3) mit und/oder aus der biogenen Kieselsäure, zumindest ein, bevorzugt temporäres, Bindemittel, zumindest ein Sprengmittel, und gegebenenfalls ein Lösungsmittel für das oder die Bindemittel,
b) Einfüllen der Mischung in eine Form,
c) Verdichten der Mischung,
d) Entformen der grünfesten Platte (1),
e) Abbinden lassen der Platte (1).

15. Verfahren nach Anspruch 14,
**dadurch gekennzeichnet, dass**
die Zusammensetzung der Mischung so eingestellt wird, dass die Mischung nach 30 s unter Vibration ein Ausbreitmaß, bestimmt in Anlehnung an DIN EN ISO 1927-4 (03/2013), von 200 bis 500 mm, bevorzugt 250 bis 350 mm aufweist.

16. Verfahren nach Anspruch 14 oder 15,
**dadurch gekennzeichnet, dass**
die Mischung folgende Zusammensetzung bezogen auf die gesamte Trockenmasse aufweist, wobei sich die einzelnen Bestandteile zu 100 Gew.-% ergänzen:
| | **Anteil [Gew.-%]** | |
|---|---|---|
| | | vorzugsweise |
| Temporäres Bindemittel | 5,0 bis 30,0 | 10,0 bis 20,0 |
| Biogene Kieselsäure, vorzugsweise Reisschalenasche | 35,0 bis 94,5 | 57,0 bis 89,0 |
| Sprengmittel, vorzugsweise Blähgraphit | 0,5 bis 5,0 | 1,0 bis 3,0 |
| Weitere Zuschlagstoffe | 0 bis 20,0 | 0 bis 10,0 |
| Sonstige Bestandteile | 0 bis 10,0 | 0 bis 10,0 |

17. Verwendung einer Platte (1) nach einem der Ansprüche 1 bis 13 und vorzugsweise hergestellt gemäß einem der Ansprüche 14 bis 16 zur thermischen Isolation einer Metallschmelze, insbesondere einer Stahlschmelze, insbesondere bei der Stahlherstellung.

18. Verwendung nach Anspruch 17,
**dadurch gekennzeichnet, dass**
nach dem thermischen Zerfall der Platte (1) die lose Schüttung zur thermischen Isolation der Metallschmelze, insbesondere der Stahlschmelze, verwendet wird.

19. Verwendung nach Anspruch 17 oder 18,
**dadurch gekennzeichnet, dass**
nach dem thermischen Zerfall der Platte (1) die lose Schüttung zur Isolierung eines Blockkopfes (15) eines aus der Metallschmelze erstarrenden Gussblocks (14) beim steigenden Blockguss verwendet wird.

20. Verwendung nach einem der Ansprüche 17 bis 19,
**dadurch gekennzeichnet, dass**
die Platte (1) als Abdeckplatte (5a) zum Abdecken eines sich in einer Kokille (7) befindlichen Metallbades (6), insbesondere Stahlbades, verwendet wird.

21. Verwendung nach Anspruch 17 oder 18,
**dadurch gekennzeichnet, dass**
die Platte (1) als Abdeckplatte (5b) zum Abdecken eines sich in einem Gießverteiler (8) befindlichen Metallbades (6), insbesondere eines Stahlbades, verwendet wird.

22. Verwendung nach Anspruch 20 oder 21,
**dadurch gekennzeichnet, dass**
die Abdeckplatte (5a;b) zur Abdeckung des Metallbades (6) in der Kokille (7) oder dem Gießverteiler (8) beim steigenden oder fallenden Blockguss, vorzugsweise in einem Stahlwerk (9), verwendet wird.

## Claims

1. Heat insulating plate (1), preferably a covering plate (5a;b), especially for thermal isolation of molten metal, especially of molten steel, in a metallurgical vessel (6), wherein the plate (1) comprises a binding agent matrix (2) of at least one set binding material and aggregate grains (3) with and/or of biogenic silicic acid, preferably with and/or of rice husk ash, which grains (3) are incorporated into the binding agent matrix (2),
**characterized in that**
as additional aggregate material, the plate (1) comprises at least one expanding agent which expands under temperature load, preferably such that the plate (1) disintegrates into a loose, free-flowing bulk material.

2. Heat insulating plate (1) according to claim 1,
**characterized in that**
the binding agent matrix (2) consists of at least one set, temporary organic binding material or comprises at least one set, temporary organic binding material.

3. Heat insulating plate (1) according to claim 2,
**characterized in that**
the plate (1) is configured such that the temporary binding material burns out under temperature load and the plate (1) disintegrates into a loose, free-flowing bulk material.

4. Heat insulating plate (1) according to one of the foregoing claims,
**characterized in that**
the plate (1) disintegrates from a temperature of ≥ 150°C and ≤ 800°C, preferably ≥ 200°C and ≤ 400°C.

5. Heat insulating plate (1) according to one of claims 2 to 4,
**characterized in that**
the expansion temperature of the expanding agent lies in the range of the ignition temperature of the temporary binding material.

6. Heat insulating plate (1) according to one of the foregoing claims ,
**characterized in that**
the expanding agent pertains to an agent made of intumescent material, preferably to expanded graphite or unexpanded perlite or unexpanded vermiculite or unexpanded clay or synthetic resins, preferably urea formaldehyde and/or melamine formaldehyde resins and/or melamine-phosphoric acid compounds, for example, mono-melamine phosphate.

7. Heat insulating plate (1) according to one of claims 2 to 6,
**characterized in that**
the temporary binding material pertains to a polymer, preferably a polysaccharide, which sets due to polycondensation and burns up without residue, preferably in an oxygen atmosphere.

8. Heat insulating plate (1) according to one of claims 2 to 7,
**characterized in that**
the plate (1) as temporary binding material comprises cellulose, preferably methyl cellulose, and/or polyvinyl alcohol, preferably polyvinyl acetate and/or polyvinyl pyrrolidone, and/or lignin sulfonate.

9. Heat insulating plate (1) according to one of the preceding claims,
**characterized in that**
the biogenic silicic acid pertains to rice husk ash and/or to diatomaceous earth (kieselguhr) and/or to siliceous rock and/or diagenetic radiolarian taxa solidified into stone and/or sponges made of opal.

10. Heat insulating plate (1) according to one of the preceding claims,
**characterized in that**
as aggregate material, the plate (1) exclusively comprises biogenic silicic acid and at least one expanding agent, wherein the biogenic silicic acid pertains preferably exclusively to rice husk ash.

11. Heat insulating plate (1) according to one of the preceding claims,
**characterized in that**
the plate (1) comprises a dry apparent density *p*₀ from 0.3 to 1.5 g/cm³, preferably from 0.5 to 1.3 g/cm³, according to DIN EN 1094-4 (09/1995) and/or
a porosity from 60 to 90%, preferably from 70 to 80%, according to DIN EN 1094-4 (09/1995).

12. Heat insulating plate (1) according to one of the preceding claims,
**characterized in that**
the plate (1) comprises a cold compression strength from 3.0 to 25.0 MPa, preferably from 5.0 to 20.0 MPa, according to DIN EN 993-5 (12/1998) and/or
a cold bending strength from 1.5 to 10.0 MPa, preferably from 2.0 to 8.0 MPa, according to DIN EN 993-6 (04/1995).

13. Heat insulating plate (1) according to one of the preceding claims,
**characterized in that**
the binding agent matrix (2) comprises at least one permanent, set binding material or consists of at least one permanent set binding material.

14. Method for producing a heat insulating plate (1) according to one of the preceding claims,
**characterized by**
the following method steps:
a) Preparation of a mixture comprising the aggregate grains (3) with and/or of the biogenic silicic acid, at least one, preferably temporary, binding material, at least one expanding agent, and potentially a solvent for the binding material(s),
b) Filling the mixture into a mold,
c) Compacting the mixture,
d) Removal of the green plate (1) from the mold,
e) Letting the plate (1) set.

15. Method according to claim 14,
**characterized in that**
the composition of the mixture is adjusted such that the mixture after 30 s under vibration, has a slump of 200 to 500 mm, preferably 250 to 350 mm, determined in reference to DIN EN ISO 1927-4 (03/2013).

16. Method according to claim 14 or 15,
**characterized in that**
the mixture has the following composition relative to total dry mass, wherein the individual constituents add up to 100 wt-%:
| | **Amount [wt-%]** | |
|---|---|---|
| | | preferably |
| Temporary binding material | 5.0 to 30.0 | 10.0 to 20.0 |
| Biogenic silicic acid, preferably rice husk ash | 35.0 to 94.5 | 57.0 to 89.0 |
| Expanding agent, preferably expanded graphite | 0.5 to 5.0 | 1.0 to 3.0 |
| Other aggregates | 0 to 20.0 | 0 to 10.0 |
| Other constituents | 0 to 10.0 | 0 to 10.0 |

17. Use of a plate (1) according to one of claims 1 to 13 and preferably produced according to one of claims 14 to 16 for thermal isolation of a molten metal, in particular of molten steel, in particular in the production of steel.

18. Use according to claim 17,
**characterized in that**
after the thermal disintegration of the plate (1), the loose bulk material is used for thermal isolation of the molten metal, in particular of the molten steel.

19. Use according to claim 17 or 18,
**characterized in that**
after the thermal disintegration of the plate (1), the loose bulk material is used for isolation of an ingot head (15) of an ingot (14) solidifying from the molten metal during rising ingot casting.

20. Use according to one of the preceding claims 17 to 19,
**characterized in that**
the plate (1) is used as covering plate (5a) for covering of a metal bath (6), in particular a steel bath, located in a ingot mold (7).

21. Use according to claim 17 or 18,
**characterized in that**
the plate (1) is used as covering plate (5b) for covering of a metal bath (6), in particular a steel bath, located in a casting distributor (8).

22. Use according to claim 20 or 21,
**characterized in that**
the covering plate (5a, b) is used for covering of the metal bath (6) in the ingot mold (7) or in the casting distributor (8) during rising or falling ingot casting, preferably in a steel mill (9).

## Revendications

1. Plaque d'isolation thermique (1), de préférence plaque de recouvrement (5a ; b), destinée en particulier à l'isolation thermique de matières métalliques fondues, en particulier d'acier fondu, dans une cuve métallurgique (6), la plaque (1) comportant une matrice de liant (2) formée d'au moins un liant durci et de granulats (3) pourvu et/ou formé de silice biogénique, de préférence pourvu et/ou formé de cendres de cosse de riz, qui sont incorporées dans la matrice de liant (2),
**caractérisée en ce que**
la plaque (1) comprend comme autre additif au moins un agent délitant qui s'expanse lorsqu'il est exposé à la température, de préférence de sorte que la plaque (1) se désintègre en un lit meuble et fluide.

2. Plaque d'isolation thermique (1) selon la revendication 1,
**caractérisée en ce que**
la matrice de liant (2) est constituée d'au moins un liant organique, durci, temporaire, ou comporte au moins un liant organique, durci, temporaire.

3. Plaque d'isolation thermique (1) selon la revendication 2,
**caractérisée en ce que**
la plaque (1) est conçue de telle sorte que le liant temporaire brûle lorsqu'il est exposé à la température et la plaque (1) se désintègre dans le lit meuble et fluide.

4. Plaque d'isolation thermique (1) selon l'une des revendications précédentes,
**caractérisée en ce que**
la plaque (1) se désagrège à partir d'une température ≥ 150 °C et ≤ 800 °C, de préférence ≥ 200 °C et ≤ 400 °C.

5. Plaque d'isolation thermique (1) selon l'une des revendications 2 à 4,
**caractérisée en ce que**
la température d'expansion de l'agent délitant se situe dans la plage de la température d'inflammation du liant temporaire.

6. Plaque d'isolation thermique (1) selon l'une des revendications précédentes,
**caractérisée en ce que**
l'agent délitant est un agent en matériau intumescent, de préférence du graphite expansé ou de la perlite non expansée ou de la vermiculite non expansée ou des résines d'argile ou de matière plastique non expansées, de préférence des résines urée-formaldéhyde et/ou mélamine-formaldéhyde et/ou des composés mélamine-acide phosphorique, par exemple du phosphate de mono-mélamine.

7. Plaque d'isolation thermique (1) selon l'une des revendications 2 à 6,
**caractérisée en ce que**
le liant temporaire est un polymère, de préférence un polysaccharide, qui durcit par polycondensation et brûle sans résidu, de préférence dans une atmosphère d'oxygène.

8. Plaque d'isolation thermique (1) selon l'une des revendications 2 à 7,
**caractérisée en ce que**
la plaque (1) contient comme liant temporaire de la cellulose, de préférence de la méthylcellulose, et/ou de l'alcool polyvinylique, de préférence de l'acétate de polyvinyle et/ou de la polyvinylpyrrolidone, et/ou du sulfonate de lignine.

9. Plaque d'isolation thermique (1) selon l'une des revendications précédentes,
**caractérisée en ce que**
la silice biogénique est de la cendre de cosse de riz et/ou de la terre de diatomées (kieselguhr) et/ou de l'ardoise de silice et/ou des squelettes radiolarines solidifiés de manière diagénétique pour former de la roche et/ou des éponges d'opale

10. Plaque d'isolation thermique (1) selon l'une des revendications précédentes,
**caractérisée en ce que**
la plaque (1) comporte comme additif exclusivement de la silice biogénique et au moins un agent délitant, la silice biogénique étant de préférence exclusivement de la cendre de cosse de riz.

11. Plaque d'isolation thermique (1) selon l'une des revendications précédentes,
**caractérisée en ce que**
la plaque (1) a une densité apparente sèche po de 0,3 à 1,5 g/cm³, de préférence de 0,5 à 1,3 g/cm³, selon la norme DIN EN 1094-4 (09/1995) et/ou
une porosité de 60 à 90 %, de préférence de 70 à 80 %, selon la norme DIN EN 1094-4 (09/1995).

12. Plaque d'isolation thermique (1) selon l'une des revendications précédentes,
**caractérisée en ce que**
la plaque (1) a une résistance à la compression à froid de 3,0 à 25,0 MPa, de préférence de 5,0 à 20,0 MPa, selon DIN EN 993-5 (12/1998) et/ou
une résistance à la flexion à froid de 1,5 à 10,0 MPa, de préférence de 2,0 à 8,0 MPa, selon la norme DIN EN 993-6 (04/1995).

13. Plaque d'isolation thermique (1) selon l'une des revendications précédentes,
**caractérisée en ce que**
la matrice de liant (2) contient un liant permanent durci ou comprend au moins un liant durci permanent.

14. Procédé de fabrication d'une plaque d'isolation thermique (1) selon l'une des revendications précédentes,
**caractérisé par**
les étapes suivantes :
a) réaliser un mélange comprenant les granulats (3) pourvu et/ou formé de silice biogénique, au moins un liant, de préférence temporaire, au moins un agent délitant, et éventuellement un solvant l'au moins un liant,
b) introduire le mélange dans un moule,
c) compresser le mélange,
d) démouler la plaque résistante à vert (1),
e) laisser durcir la plaque (1).

15. Procédé selon la revendication 14,
**caractérisée en ce que**
la composition du mélange est ajustée de sorte que, au bout de 30 s sous vibration, le mélange présente une expansion, déterminée selon la norme DIN EN ISO 1927-4 (03/2013), de 200 à 500 mm, de préférence de 250 à 350 mm.

16. Procédé selon la revendication 14 ou 15,
**caractérisé en ce que**
le mélange a la composition suivante, sur la base de la matière sèche totale, les composants individuels totalisant jusqu'à 100 % en poids :
| | Pourcentage [% en poids] | |
|---|---|---|
| | | De préférence |
| Liant temporaire | 5,0 à 30,0 | 10,0 bis 20,0 |
| Silice biogénique, de préférence cendres de cosse de riz | 35,0 à 94,5 | 57,0 bis 89,0 |
| Agent délitant, de préférence graphite expansée | 0,5 à 5,0 | 1,0 à 3,0 |
| Autres additifs | 0 à 20,0 | 0 à 10,0 |
| Autres ingrédients | 0 à 10,0 | 0 à 10,0 |

17. Utilisation d'une plaque (1) selon l'une des revendications 1 à 13 et de préférence réalisée selon l'une des revendications 14 à 16 pour l'isolation thermique d'une matière métallique fondue, en particulier d'un acier fondu, notamment dans la fabrication d'acier.

18. Utilisation selon la revendication 17,
**caractérisée en ce que**
après la désintégration thermique de la plaque (1), le lit meuble est utilisé pour l'isolation thermique de la matière métallique fondue, en particulier de l'acier fondu.

19. Utilisation selon la revendication 17 ou 18,
**caractérisée en ce que**
après la désintégration thermique de la plaque (1), le lit meuble est utilisé pour isoler une tête de lingot (15) d'un lingot de coulée (14), se solidifiant à partir de la matière métallique fondue, lorsque la coulée de lingot augmente.

20. Utilisation selon l'une des revendications 17 à 19,
**caractérisée en ce que**
la plaque (1) est utilisée comme plaque de recouvrement (5a) destinée à recouvrir un bain métallique (6), notamment un bain d'acier, situé dans une lingotière (7).

21. Utilisation selon la revendication 17 ou 18,
**caractérisée en ce que**
la plaque (1) sert de plaque de recouvrement (5b) pour recouvrir un bain métallique (6), notamment un bain d'acier, situé dans un distributeur de coulée (8).

22. Utilisation selon la revendication 20 ou 21,
**caractérisée en ce que**
la plaque de recouvrement (5a ; b) est utilisée pour recouvrir le bain de métal (6) dans la lingotière (7) ou le distributeur de coulée (8) lorsque la coulée de lingot augmente ou diminue, de préférence dans une aciérie (9).
